# EUROPEAN PATENT APPLICATION

(11) **EP 0 993 895 A1**
(43) Date of publication of application: **19.04.2000**
(21) Application number: 99307187.7
(22) Date of filing: 10.09.1999
(51) Int. Cl.: B23K 9/073

(54) **Improvements in arc welding**

(30) Priority: 13.10.1998 GB 9822260
(71) Applicant: The BOC Group plc, Windlesham Surrey GU20 6HJ (GB)
(72) Inventor: Veldsman, Walter Mark, Burpham, Guildford GU4 7NL (GB); Arnold, Gareth Christopher, Forest Row, East Sussex RH18 5AT (GB)
(74) Representative: MacLean, Martin David

(57) **Abstract**

An apparatus for arc welding comprising a welding torch, a source of shielding gas, a line between the welding torch and said source, a solenoid valve located in the line, and means for generating a signal dependent upon a physical property of the welding arc, said signal controlling the setting of the solenoid valve and hence the flow of shielding gas to the welding torch.

## Description

The present invention relates to apparatus for arc welding.

Gas metal arc welding (GMAW) is an electric arc welding process in which the arc is shielded from the ambient atmosphere by a gas or a mixture of gases. For the avoidance of doubt, throughout this specification, reference to shielding gas is intended to include shielding gas mixtures. In the GMAW process metal is transferred to a workpiece through the arc from a consumable wire electrode. The consumable wire electrode is continuously fed into the arc at a pre-selected speed corresponding to a given deposition rate for a given wire size.

Gas metal arc welding and similar arc welding processes such as gas tungsten arc welding (GTAW) and flux cored arc welding (FCAW) normally operate with fixed shielding gas flow rates. The shielding effect of the gas is usually adequate when the stand-off distance, that is the distance from the proximal end of the welding torch to the workpiece being welded is constant.

However, difficulties arise where the stand-off distance changes frequently as in hand welding and adjustment needs to be made to ensure as far as possible that adequate shielding gas flow rates are available.

It is an aim of the present invention to provide an apparatus for arc welding in which the flow of shielding gas to the welding torch is controlled automatically dependent upon feedback from a physical property of the welding arc.

According to the present invention, an apparatus for arc welding comprises a welding torch, a source of shielding gas, a line between the welding torch and said source, a solenoid valve located in said line, and means for generating a signal dependent upon a physical property of the welding arc when said apparatus is in use, said signal controlling the setting of the solenoid valve and hence the flow of shielding gas through said line towards the welding torch.

Preferably, the means is a micro-processor based gas flow controller.

In a preferred embodiment the physical property is the arc length or stand-off distance.

An embodiment of the invention will now be described by way of example, reference being made to the Figures of the accompanying diagrammatic drawings in which:-
Figure 1 is a schematic sketch of an apparatus for arc welding according to the present invention; and
Figure 2 is a schematic sketch of a gas flow controller which forms part of the apparatus of Figure 1.

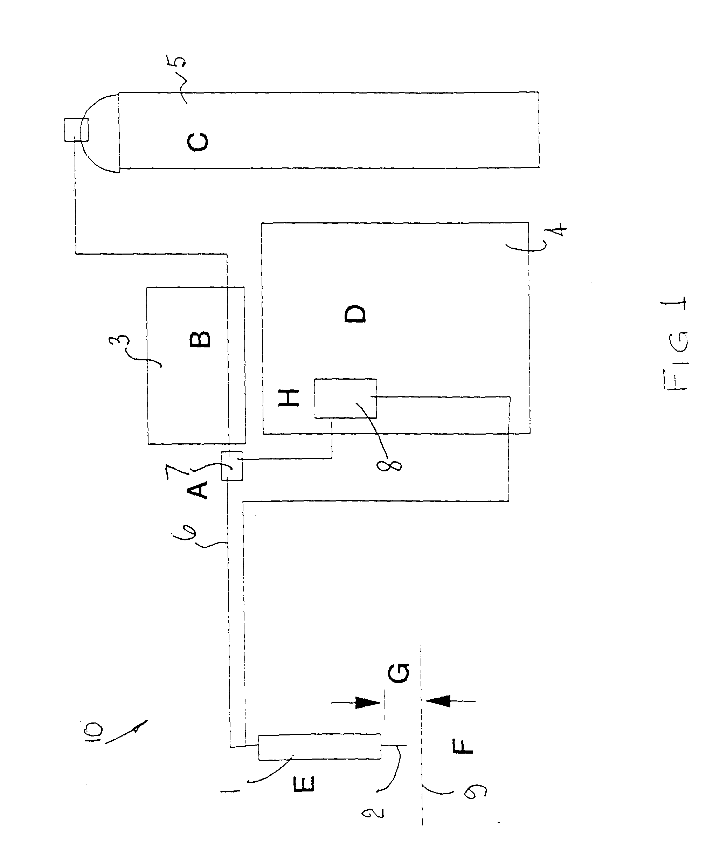

Referring first to Figure 1, an apparatus 10 for arc welding includes an arc welding torch 1 and a source of shielding gas in the form of a gas cylinder 5. A line 6 extends between the gas cylinder 5 and the welding torch 1 and located in the line 6 is a linear variable solenoid valve 7.

A consumable wire electrode 2 is drawn from a wire feed unit 3. The consumable wire electrode 2 may be of any suitable metal composition appropriate for the particular welding application.

A welding power source 4 supplies power to the torch 1 and also to the wire feed unit 3. Associated with the power source 4 is a micro-processor based gas flow controller 8.

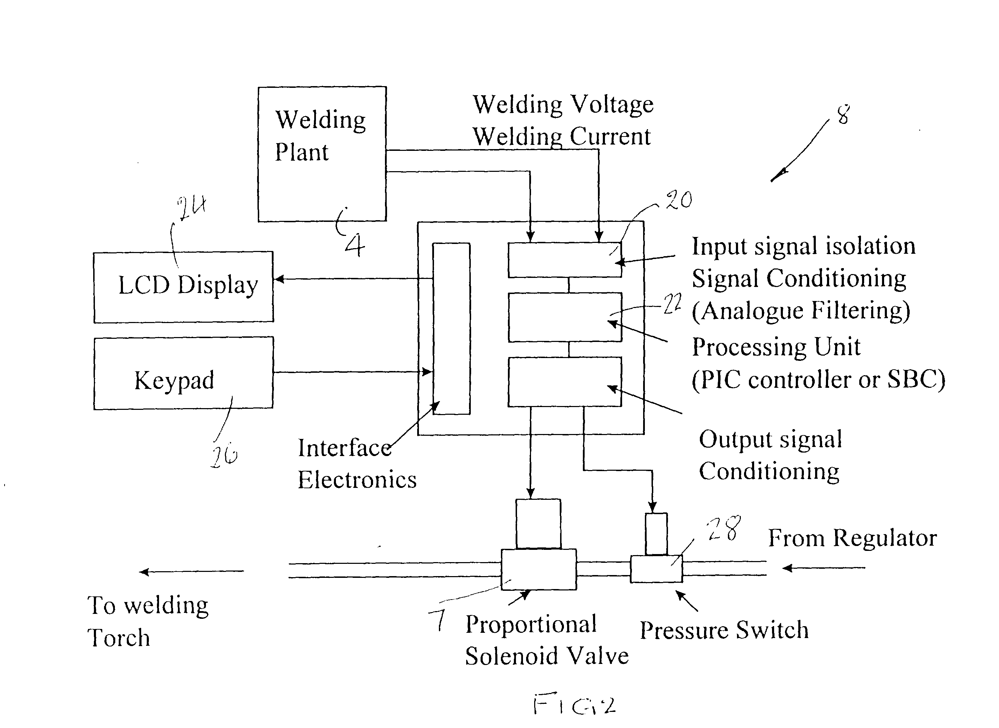

Referring also to Figure 2, the gas flow controller 8 receives signals proportional to the welding current and voltage which are first isolated at an opto isolator 20 and filtered to remove high frequency noise. The signals then pass to an A/D converter where they are digitised. The digitised signals are then processed in a unit 22 in order to convert the signals to a valve control signal which is ultimately sent to the solenoid valve 7.

The gas flow controller 8 includes a display unit 24 and a keypad 26 which enable the user to select a range of options for determining, for example, the gas flow sensitively to welding voltage. A pressure switch 28 may be provided which is monitored by the controller 8 to sense low flow conditions or to compensate for gas pressure variations.

The A/D converter may be an integral part of the controller 8 or alternatively a separate discrete component. The unit 22 may be a low cost micro-controller or similar micro-processor system for converting input welding signals to a solenoid valve control signal

In operation, an arc is established between the consumable electrode 2 and a workpiece 9 by energising the power source 4 and feeding the wire electrode 2 into direct contact with the workpiece 9. The electrode 2 is then withdrawn to a suitable stand-off position as illustrated. The controller 8 senses a physical property of the arc eg the length of the arc and/or arc resistance that is welding current and voltage and generates signals which are directed to the solenoid valve 7. The setting of the solenoid valve 7 is then adjusted to allow a pre-determined flow of shielding gas from the cylinder 5 through the line 6 to the welding torch 1.

The controller 8 constantly monitors the physical parameter of the arc so that, for example, in a hand welding operation the changes of the stand-off distance/physical parameter of the arc will be sensed and an appropriate signal sent to the solenoid valve 7 thereby constantly adjusting the flow rate of shielding gas from the cylinder to the welding torch 1. The controller 8 allows the real time control of gas flow through the line 6 towards the welding torch!

It will be apparent from the above described embodiment that the optimum shielding gas flow rate is always available at the welding torch 1 to ensure efficient coverage of the weld to prevent weld related defects such as porosity and the reduction of weld metal impact strengths. As the welding stand-off distance increases the resistance increases and it is this feedback that will determine the increase or decrease in the flow rate to compensate for the change in arc length.

## Claims

1. An apparatus for arc welding comprising a welding torch, a source of shielding gas, a line between the welding torch and said source, a solenoid valve located in the line, and means for generating a signal dependent upon a physical property of the welding arc, said signal controlling the setting of the solenoid valve and hence the flow of shielding gas to the welding torch.

2. An apparatus as claimed in claim 1, in which the physical property is the arc length.

3. An apparatus as claimed in claim 1 or 2, in which the means is a micro-processor based gas flow controller.

4. An apparatus as claimed in any one of claims 1 to 3 in which a pressure switch is located in the line upstream of the solenoid valve.
